# EUROPEAN PATENT APPLICATION

(11) **EP 1 879 032 A1**
(43) Date of publication of application: **16.01.2008**
(21) Application number: 07012314.6
(22) Date of filing: 23.06.2007
(51) Int. Cl.: G01P 3/44, G01P 3/487, G01K 13/08

(54) **Combined speed and temperature sensor for an engine**

(30) Priority: 14.07.2006 JP 2006194042
(71) Applicant: Toyo Denso Co., Ltd., Minato-ku Tokyo 105-0004 (JP)
(72) Inventor: Oshima, Sadayoshi, Tsurugashima-shi Saitama 350-2280 (JP); Sugawara, Toru, Tsurugashima-shi Saitama 350-2280 (JP)
(74) Representative: von Kirschbaum, Albrecht

(57) **Abstract**

The object of the present invention is to provide a multifunctional detector wherein two sensors, for detecting the rotational speed of the transmission gear and for detecting the temperature of the transmission oil are disposed in proximity in a single unit so that they can be connected easily to a control ECU through a single connector.
The multifunctional detector for an engine according to the present invention is configured such that a sensor for detecting the rotational speed of the gear within a transmission for a vehicle and a sensor for detecting the temperature of the surrounding transmission oil are mounted on the same circuit board and provided in a single case, and such that a housing chamber therefor is filled with a silicone resin having high thermal conductivity, and the outputs of both sensors are performed from a single connector.

## Description

### BACKGROUND OF THE INVENTION

### 1. Field of the Invention

The present invention relates to a multifunctional detector for an engine, and particularly relates to a composite device of a sensor for detecting the rotational speed of the main shaft in the engine transmission of an automobile or the like, and a sensor for detecting the transmission oil temperature of a gear for controlling the transmission.

### 2. Description of the Related Art

Conventionally sensors for detecting the rotational speed of the main shaft in an engine transmission in an automobile, or the like, and sensors for detecting the temperature of transmission oil for the transmission gears therein, have been installed separately in transmission devices. While these sensors are positioned adjacent to each other, they have been installed as independent devices, and the output lines thereof have also been wired separately from each connector to an ECU for control. There are also many sensors for devices other than the transmission, causing the surrounding wiring to be complicated.

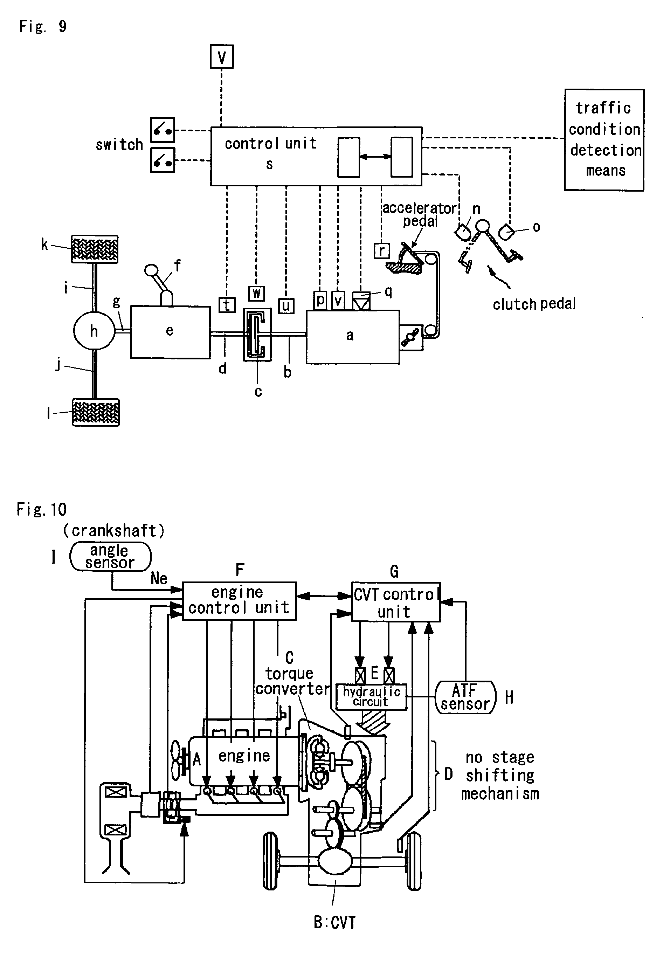

Japanese Patent Application Publication H11-294547, "Control Device and Control Method for Automatic Shift for Vehicle," is an invention for a vehicle with a continuously variable transmission, wherein a road surface slope estimating unit for calculating the slope of the road surface, and a target vehicle speed determining unit for determining the speed of the vehicle depending on the slope of the road surface, are provided for the purposes of being able to produce a driving force that depends on the slope of the surface of the road, without the driver having to change the transmission mode himself/herself, so that if, when the vehicle is in motion, the slope of the road surface exceeds a preinstalled determination value, a target vehicle speed is produced based on the speed of the vehicle at the point in time wherein the gradient value exceeded a set value, and control of the transmission gear ratio is executed so as to achieve that speed. Fig. 10 is a system structure diagram showing the vehicle engine and power train parts from the continuous variable transmission (CVT) in Japanese Patent Application Publication H11-294547, where, in the figure, the reference numeral A indicates the engine, B is a CVT, C is a torque converter, D is a continuously variable transmission, E is a hydraulic circuit, F is an engine control unit, and G is a CVT control unit. The hydraulic circuit E is provided with an ATF sensor H for detecting the temperature of the fluid, where the output of this ATF sensor H is sent to the CVT control unit G, where a crank angle sensor I for detecting the engine rotational speed Ne is provided on the crankshaft (not shown), which is the output power shaft of the engine A, to measure the rotational speed thereof, where the output of the crank angle sensor I is sent to the engine control unit F. As described above, a structure has been used wherein this crank angle sensor I and ATF sensor H have been disposed separately in the power train part.

Japanese Patent Application Publication 2003-176739, "Automatic On/Off Device for Internal Combustion Engine" proposes the optimization of automatically turning ON and OFF an internal combustion engine for an automobile so as to avoid turning the internal combustion engine OFF unnecessarily and to ensure that the internal combustion engine will turn back ON quickly, where this device comprises separate means for detecting the status of traffic surrounding the automobile, where a control device also turns ON and OFF the internal combustion engine depending on the traffic status. The basic structure of the internal combustion engine relating to this invention is shown in Fig. 9, where, in the figure, reference numeral a is an internal combustion engine, b is a crankshaft, c is a clutch, d is an input shaft for a transmission e, and is connected to the clutch c. The transmission e is structured as a transmission provided with a gear selecting lever f. The transmission output power shaft g, which is disposed to the rear of the transmission e is connected to a differential gear h, where axles i and j, having wheels k and 1, are provided branching from this differential gear h. A control device s is connected through sensor lines and/or control lines, shown by the dotted lines, to an accelerator pedal r, a starter p, a fuel pump q, a transmission input power shaft d rotational speed sensor t, a crankshaft b rotational speed sensor u, clutch pedal sensors n and o, and internal combustion engine a temperature sensor v. Furthermore, the control device s is also connected through sensor lines to a clutch sensor w for conveying the clutch operating status. This device also the uses a structure wherein the rotational speed sensors t and u, and the temperature sensor v are disposed separately.

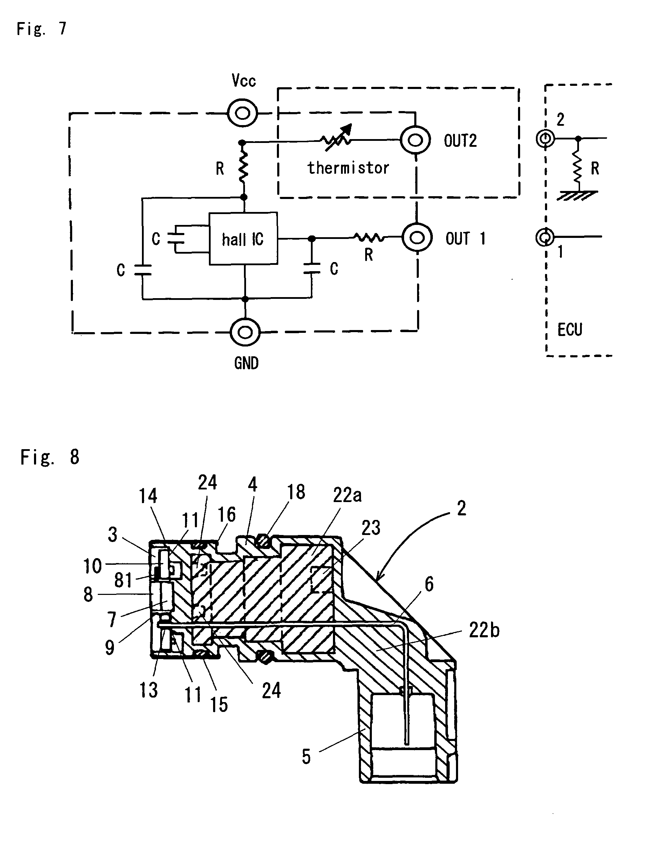

Japanese Patent Application Publication H11-325961, "Sensor Body for Rotation Detector," relates to a rotation detector for generating a pulse signal depending on the rotation of the main shaft of a transmission, and, conventionally, a sensor unit in this type of rotation sensor has been molded, as shown in Fig. 8, with an housing chamber 3 for the sensor part disposed at the front edge part, a connector 5 disposed at the back edge part, and a trunk part 4 therebetween. The object of this invention is to prevent the external lead-out terminals, disposed on one side of the case unit, from becoming bent due to a pressure differential during molding; thus as shown in Fig. 8, the sensor unit 2 is formed by performing a primary molding on the intermediate portion of the terminals 6, and then performing a secondary molding on the outside of the primary molded body 22a. In the figure, reference numbers 23 and 24 are pinholes for holding a primary molded body 22a when molding a secondary molded body. At the time of the secondary molding, the holding pins (movable pins) are removed from the pinholes 23 in the rear part, so that the pinholes 23 will be blocked with resin, for water tightness. Moreover, the pinholes 24 in the rear part are provided in a plurality of locations around the periphery so that the primary molded body 22a will not rotate. Moreover, because the pins are removed from the pinholes 23 at the rear part during the secondary molding, fastening pins are used, through the respective pinholes 24, to hold the primary molded body 22a so as to not move. Consequently, according to this invention, the center portion of each of the terminals 6, disposed spanning from the housing chamber 3 of the sensor part on the front of the sensor unit 2 to the connector 5 on the rear, is covered by the primary molded body 22a, and in this state the formation of the molding from resin, which should form the sensor unit 2, is performed in two stages, thus preventing the terminals 6, disposed on one side of the trunk part 4, from becoming bent due to a molding pressure differential. However, ultimately this is a technology relating to sensors for detecting the rotational speed, and a separate sensor is required for detecting the temperature.

### SUMMARY OF THE INVENTION

As described above, even though in the conventional device the sensors for detecting the rotational speed of the transmission gear and for detecting the temperature of the transmission oil are disposed in adjacent locations, they are attached as separate devices. There is the problem of the complexity of the wiring, arising therefrom, because of the wiring from each connector of the output lines independently to the control ECU.

The object of the present invention is to solve this problem, that is, to provide a multifunctional detector capable of disposing, within a single unit and in proximity to each other, two sensors for detecting the rotational speed of the transmission gear and detecting the temperature of the transmission oil, wherein it is possible to connect easily to the control ECU through a single connector.

The multifunctional detector for an engine according to the present invention comprises, within a single case, a sensor for detecting the rotational speed of a gear within a transmission for a vehicle, and a sensor for detecting the temperature of surrounding transmission oil, the outputs of both sensors being performed from a single connector.

Moreover, the multifunctional detector for an engine according to the present invention, employs an electromagnetic pickup sensor, comprising a Hall IC and a magnet, as the rotational speed detecting sensor, employs a temperature-sensitive resistor, made from a thermistor, as the temperature detecting sensor, and employs a structure wherein both sensors are mounted on the same circuit board.

The multifunctional detector for an engine according to the present invention employs a structure wherein a housing chamber within the case in which these two sensors are disposed is filled with a resin having high thermal conductivity, such as a silicone resin.

The multifunctional detector for an engine according to the present invention is provided with a sensor for detecting the rotational speed of a gear within the vehicle transmission, and a sensor for detecting the temperature of the surrounding transmission oil, provided in a single case, and thus can reduce the labour in assembling the transmission as a whole. Moreover, by having the outputs from both sensors come from a single connector, that is, by being able to combine two sets of output wires from both sensors in a single connector disposed within the case, the wiring in the vicinity of the transmission can be reduced in thickness. The result is the superior effect of being able to increase the degree of freedom in design in the vicinity of the transmission.

The multifunctional detector for an engine according to the present invention employs an electromagnetic pickup sensor, comprising a Hall IC and a magnet, as the rotational speed detecting sensor, and employs a temperature-sensitive resistance, made from a thermistor, as the sensor for detecting the temperature, thus enabling the sensors themselves to be miniaturized, and enabling the sensors to be mounted on a single circuit board.

Furthermore, the multifunctional detector for an engine according to the present invention employs a structure wherein a housing chamber of the case in which both sensors are disposed is filled with a resin having a high thermal conductivity, and thus eliminates the air surrounding the temperature sensor, and improves the thermal conductivity. The thermal conductivity of the air, being smaller than that of metal, requires a longer time to reach a specific temperature, but the structure described above enables increased responsiveness to temperature. In particular, the use of silicone resin is beneficial in terms of cost, and provides desirable characteristics.

### BRIEF DESCRIPTION OF THE DRAWINGS

Fig. 1 is a front view cross-sectional diagram of a sensor unit in a multifunctional detector for an engine according to the present invention;
Fig. 2 is a circuit structure diagram of a multifunctional detector for an engine according to the present invention;
Fig. 3 is an overhead view of a sensor unit of a multifunctional detector for an engine according to the present example of embodiment;
Fig. 4 is a partial plan view of terminals split into four branches, used in the present invention, formed into a single line using a holding part;
Fig. 5 is a partial cross sectional back view of a sensor unit of a multifunctional detector for an engine according to the present invention;
Fig. 6 is a side view, with the cap removed, of a sensor unit of a multifunctional detector for an engine according to the present invention;
Fig. 7 is a circuit structural diagram of the present invention, wherein a voltage divider resistance is provided in an ECU;
Fig. 8 is a front cross-sectional diagram of a sensor unit of a conventional rotation sensor;
Fig. 9 is a diagram showing the rotation sensor and temperature sensor in the control device and control method for an automatic transmission for a vehicle according to an invention in a previous application; and
Fig. 10 is a figure showing the rotation sensor and temperature sensor in an automatic ON/OFF device for an internal combustion engine according to an invention in a previous application.

### DETAILED DESCRIPTION OF THE INVENTION

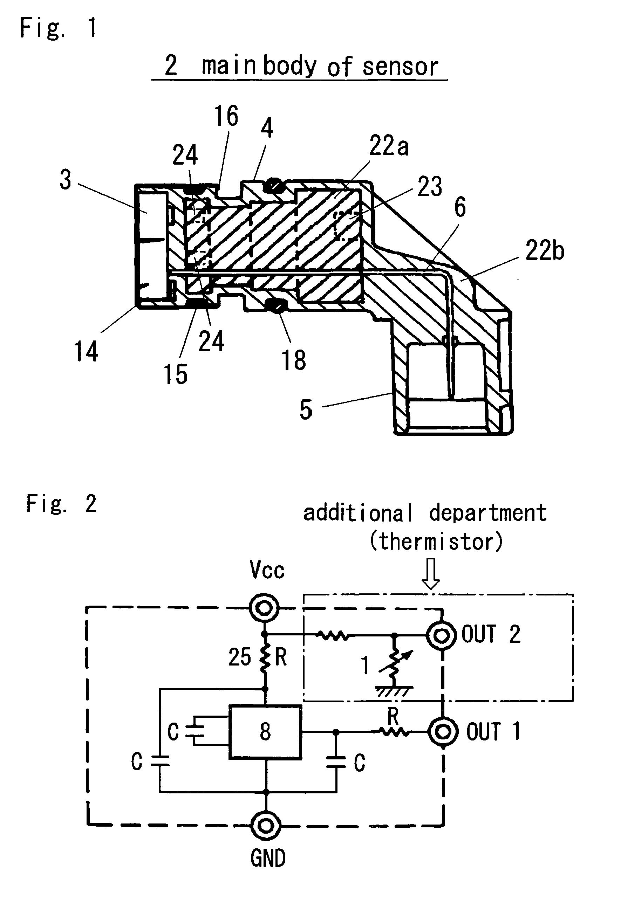

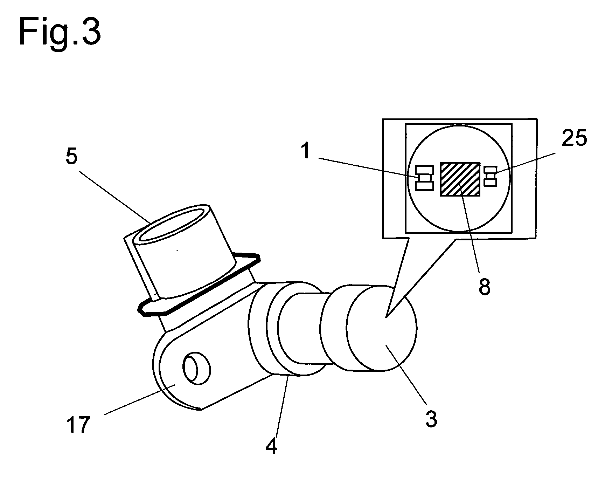

A first embodiment of a multifunctional detector for an engine according to the present invention will be described in reference to Fig. 1 through Fig. 6. Fig. 1 is a front cross-sectional view of this embodiment, where, in the figure, reference number 2 is the sensor unit, 3 is the sensor housing chamber, 4 is a trunk part, 5 is a connector, 6 is an external terminal, 22a is a primary molded body, and 22b is a secondary molded body. The sensor housing part 3 for housing a sensor circuit board, upon which structural elements such as both sensors are disposed, is disposed on one end part of the sensor unit 2, wherein the connector 5 is disposed on the other end of the sensor unit 2. The external shape of the multifunctional detector for an engine according to the present invention, as can be seen from the overhead view shown in Fig. 3, is such that the sensor unit 2 for the rotation detector is structured through molding, using resin, the housing chamber 3 of the sensor part and the connector 5 integratedly through a trunk part 4 that is shaped like a stack of disks. Moreover, a bush seat 17, for attaching the sensor unit 2 at a specific location, is formed on the connector 5 side of the trunk part 4. Fig. 2 shows a circuit diagram of the multifunctional detector for an engine according to the present invention, and as can be seen from the figure, the sensor circuit board in the present invention is formed with the addition of a temperature sensor part, surrounded by the dotted line, on the circuit structure of the rotation detector sensor in Patent Application Publication H11-325961. Moreover, on the output end (OUT1), gear rotation pulses are outputted, and on the output end (OUT2), a transmission oil temperature signal is outputted. Because the structure shown in Fig. 8, which is a cross-sectional diagram of Patent Application Publication H11-325961 is identical to the present embodiment, insofar as the cross section is concerned, even though the present invention is employed, not only is a case part 9 formed with a permanent magnet 7 and a Hall IC 8 inserted, as magnetic sensing elements, in the center part of a housing chamber 3 in the sensor part, with the Hall IC 8 towards the top, as can be seen in the figure, but also the sensor circuit board 10 is installed so as to protrude into this case part 9. The sensor circuit board 10 locks onto step parts 11 that are provided protruding in a plurality of locations about the inner periphery in the housing chamber 3, and is supported in specific positions. At this time, the structure is such that when the permanent magnet 7 and the Hall IC 8, attached thereto, are inserted into the case part 9, with the sensor circuit board 10 installed, each of the terminals 81 of the Hall IC 8 make electrical contact through fitting with the respective terminal pads that are formed on the sensor circuit board 10. Note that the magnetic sensing element may be, for example, an MR element (magnetic resistance element).

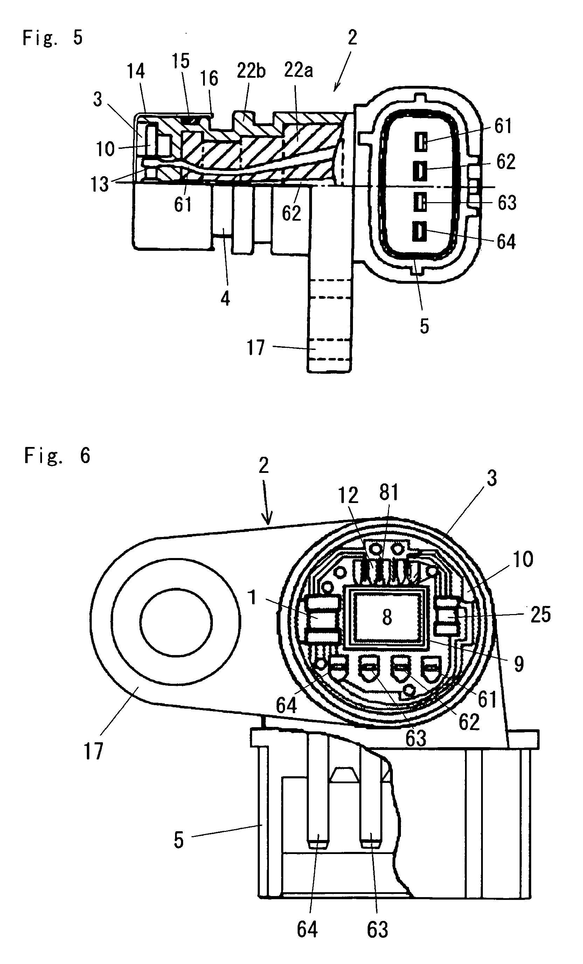

The R and C circuit elements in the sensor circuit shown in Fig. 2 are attached to the rear side of the sensor circuit board 10. In the present invention, a voltage divider resistance 25 is provided, along with the Hall IC 8 for detecting the gear teeth of the gears and the thermistor element 1 for detecting the oil temperature, on this same sensor circuit board 10, as can be seen in Fig. 6, which is a side view with the cap 14 removed. The Hall IC 8 fits into the case 9 along with the magnet 7 that is integrated with the back surface. Moreover, as is clear from Fig. 5 which is a partial cross sectional back view of a sensor unit 2 and Fig. 6, the external lead-out terminals 6 (61, 62, 63, and 64), for GND, OUT1, OUT2, and Vcc, respectively, in the sensor circuit are embedded within the resin of the trunk part 4, in a state where these terminals 6 are disposed separated from each other, passing between the housing chamber 3 and the connector 5, where the tip parts of each of these terminals 6 each extend into the connector 5. The other tip parts of each of the terminals 6 each go through the through holes 13 that are provided in the sensor circuit board 10, and are each soldered in specific locations in the circuit pattern. This type of invention makes it possible to combine the power supply systems and the detector output systems through a single connector 5 by disposing on a single circuit board a Hall IC 8 for detecting the gear teeth of the gear and a thermistor element 1 for detecting the oil temperature. Note that while the voltage divider resistance 25 is shown in an example mounted in the sensor main unit 2, the present invention is not limited thereto, but rather the voltage divider resistance maybe disposed within the ECU, for example, as shown in Fig. 7.

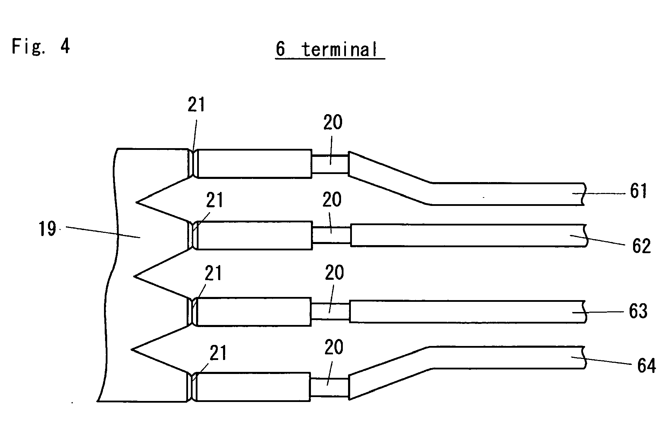

As shown in Fig. 4, the external lead-out terminals 6 assume a four-way split terminal structure, and an indentation 20 is formed in each in order to prevent removal. Grooves 21 are formed on both surfaces at the base of the holder part 19. The external lead-out terminals 61, 62, 63, and 64 for GND, OUT1, OUT2, and Vcc, respectively, are formed through punching from a plate whereon a surface treatment has been performed, with the respective terminals 61, 62, 63, and 64 formed into a single structure by the holder part 19. The use of such a structure makes it possible to maintain the correct positional relationships while molding, through embedding each of the terminals into the resin in a state where the terminals are integrated by the holding part 19. In the same manner as in Patent Application Publication H11-325961, in the molding process, an intermediate portion of the various terminals is formed through the primary molding, after which the outside of this primary molded body (indicated by the slanted lines 22a that rise towards the right) is subjected to a secondary molding (indicated by the slanted lines 22b that rise to the left) to form the sensor unit 2. After the molding, the grooves 21 are formed for the holding part 19 that is exposed within the housing chamber 3, making it possible to easily break off and eliminate by bending this part, so that the terminals 61, 62, 63, and 64, in this state, will be lined up with the positions of the four through holes 13 in the sensor circuit board 10.

Not only is the case part 9, wherein the Hall IC 8 and the permanent magnet 7 are inserted into the center portion thereof, formed within the housing chamber 3 for the sensor parts, formed through molding, but also the sensor circuit board 10 is installed so as to fit in this case part 9. The sensor circuit board 10 locks on to step parts 11, provided protruding at a plurality of locations on the inner periphery of the housing chamber 3, to be held at a specific position. At this time, the tip parts of each of the terminals 61, 62, 63, and 64 are aligned with the four through holes 13 of the sensor circuit board 10, as described above, and each is inserted and soldered to secure contact with the circuit board circuit. Next, a Hall IC 8, with a permanent magnet 7 adhered to the back surface thereof, is fitted into the case part 9, and at this time, each of the terminals 81 of the Hall IC 8 is fitted to the respective terminal pad 12, formed on the sensor circuit board 10, to achieve an electrical connection. Moreover, a thermistor element 1, for detecting the temperature, is installed in a specific position on the sensor circuit board 10, along with the voltage divider resistance 25.

In the present invention, a slight separation from the transmission oil to be measured is achieved through the disposal of the thermistor element 1 on the sensor circuit board 10 in the housing chamber 3, with a cap 14 disposed therebetween. Given this, the inside of the housing chamber 3 of the sensor part is filled with a resin having high thermal conductivity, after which the opening part of the housing chamber 3 is covered. In other words, an O-ring 15 for sealing is disposed on the trunk part 4 of the sensor unit 2, and is covered with a cap 14, made out of metal that is a non-magnetic material, so as to contact this O-ring 15 on the inner surface to seal the peripheral edge part of the end part thereof. In Fig. 1 and Fig. 5, reference number 16 shows the sealed part of the cap 14. Note that in a preferred embodiment, silicone resin is filled as the fill resin. This is because silicone resin not only provides a desirable physical property of the thermal conductivity, but, as a material, can be obtained relatively inexpensively and easily.

## Claims

1. A multifunctional detector for an engine, comprising within a single case:
a sensor for detecting the rotational speed of a gear within a transmission for a vehicle; and
a sensor for detecting the temperature of a surrounding transmission oil,
wherein the outputs of both sensors are performed from a single connector.

2. The multifunctional detector for an engine according to Claim 1, wherein said rotational speed detecting sensor is an electromagnetic pickup sensor comprising a magnetic sensing element and a magnet, the sensor for detecting the temperature is a temperature-sensitive resistance comprising a thermistor, and both sensors are mounted on the same circuit board.

3. The multifunctional detector for an engine according to Claim 1, wherein a housing chamber within the case in which both sensors are disposed is filled with a resin having a high thermal conductivity.

4. The multifunctional detector for an engine according to Claim 2, wherein a housing chamber within the case in which both sensors are disposed is filled with a resin having a high thermal conductivity.

5. The multifunctional detector for an engine according to Claim 3, wherein the resin is a silicone resin.

6. The multifunctional detector for an engine according to Claim 4, wherein the resin is a silicone resin.
